Europäisches Patentamt

(19) European Patent Office

Office européen des brevets

(11) Numéro de publication : **0 082 792**
**B1**

(12) **FASCICULE DE BREVET EUROPÉEN**

(45) Date de publication du fascicule du brevet :
**09.09.87**

(21) Numéro de dépôt : **82402375.8**

(22) Date de dépôt : **23.12.82**

(51) Int. Cl.⁴ : **F 16 L 55/16**

(54) **Dispositif de cerclage pour étancher des fuites dans un raccord à brides d'une canalisation.**

(30) Priorité : **23.12.81 FR 8124081**

(43) Date de publication de la demande :
**29.06.83 Bulletin 83/26**

(45) Mention de la délivrance du brevet :
**09.09.87 Bulletin 87/37**

(84) Etats contractants désignés :
**AT BE CH DE GB IT LI LU NL SE**

(56) Documents cités :
**EP-A- 0 029 338**
**GB-A- 2 004 019**
**US-A- 4 049 296**

(73) Titulaire : **Lamotte, Jean-Noel**
**Hameau de Claville Grandcamp**
**F-76170 Lillebonne (FR)**

(72) Inventeur : **Lamotte, Jean-Noel**
**Hameau de Claville Grandcamp**
**F-76170 Lillebonne (FR)**

(74) Mandataire : **Barnay, André François et al**
**Cabinet Barnay 80 rue Saint-Lazare**
**F-75009 Paris (FR)**

## Description

La présente invention se rapporte à un dispositif permettant d'étancher une fuite dans un raccord à brides sur une canalisation, comprenant un collier de cerclage formé de deux demi-bagues se plaçant autour des brides et percé d'au moins un orifice muni d'un robinet, par où peut être injectée une substance d'obturation dans l'intervalle séparant les brides. Suivant différentes formes d'exécution, les défauts d'état de surface ou de parallélisme des brides son palliés par la présence de stries sur les surfaces de contact du collier ou par l'interposition de joncs en cuivre entre le collier et les brides.

Dans un tel dispositif, décrit dans le brevet français 78/15276 (publié sous le n° 2 426 852), les colliers à stries entraînent des phénomènes de matage sur les brides, ce qui est néfaste et déconseillé par certains organismes techniques. D'autre part, dans le cas de canalisations transportant un fluide à haute température, par exemple de la vapeur, les joncs en cuivre perdent rapidement leurs propriétés de malléabilité.

Par ailleurs, GB-A-2 004 019 décrit un dispositif permettant d'étancher une fuite dans un raccord à brides sur une canalisation, comportant deux demi-bagues présentant sur leur périphérie interne deux lèvres déformables s'étendant l'une vers l'autre et vers l'intérieur, destinées à s'appliquer sur la périphérie des brides du raccord sous l'action de la pression du produit d'étanchéité injecté.

Ce dispositif présente un inconvénient du fait que le diamètre interne de l'ensemble doit correspondre exactement au diamètre externe des brides afin que ces lèvres soient en contact avec celles-ci.

En effet, si le diamètre interne de l'ensemble est égal ou inférieur au diamètre externe des brides, les lèvres sont appliquées contre celles-ci et déformées par serrage, mais si le diamètre interne est seulement légèrement supérieur au diamètre des brides, ces lèvres n'entrent pas en contact avec elles et l'étanchéité n'est pas assurée.

De ce fait, dans ce dernier cas, ce dispositif n'est pas adaptable.

L'invention a pour but de remédier à ces inconvénients en réalisant un dispositif à collier de cerclage comportant des moyens permettant d'obtenir l'étanchéité sur la périphérie des brides d'un raccord sur une canalisation, même en cas de différence entre le diamètre des brides et celui du collier ainsi que dans le cas de défauts d'état de surface et/ou de parallélisme des brides.

L'invention a pour objet à cet effet un dispositif permettant d'étancher une fuite dans un raccord à brides sur une canalisation, du type comprenant un collier de cerclage formé de deux demi-bagues se plaçant autour des brides comportant au moins une lèvre interne de centrage en contact avec les brides faisant saillie radialement vers l'intérieur et adaptées pour s'engager entre les brides et percé d'au moins un orifice muni d'un robinet, par où peut être injectée une substance d'obturation dans l'intervalle séparant les brides, caractérisé par le fait que le collier comporte sur tout son périmètre deux ailes latérales lisses, solidaires d'une partie centrale épaisse et rigide dudit collier et s'étendant de ladite partie centrale vers l'extérieur en s'appliquant à plat contre le pourtour des brides correspondantes du raccord chaque aile latérale étant déformable et susceptible d'être sertie sur le pourtour de la bride correspondante au moyen d'un outil de sertissage, et que le collier comporte deux lèvres de centrage déformables.

Grâce à cet agencement il n'y a plus ni risque de matage des brides ni nécessité de joncs en cuivre, ni de lèvres internes sur les demi-bagues. De plus, chaque aile latérale protège l'opérateur effectuant la pose du collier en déviant le jet de fluide dans la direction de la canalisation, ce qui lui évite toute projection directe de vapeur ou de fluide agressif.

Si le diamètre des demi-bagues composant le collier correspond à celui des brides et si l'état de surface et le positionnement mutuel de celles-ci sont convenables, la simple mise en place du collier autour des brides suffit pour assurer un contact satisfaisant entre ces éléments. Mais si les diamètres ne se correspondent pas exactement ou si les brides présentent des défauts d'état de surface, d'alignement ou de parallélisme, chaque aile latérale est déformée et appliquée sur le pourtour de la bride correspondante par sertissage de ladite aile au moyen d'un outil, ce qui permet d'assurer dans tous les cas un excellent contact entre chaque aile du collier et la bride correspondante. Le sertissage peut s'étendre à tout le pourtour du collier ou se limiter à certaines zones de celui-ci.

Le collier peut comporter sur sa face interne une rainure périphérique formée entre lesdites ailes. Cette rainure peut recevoir au moins partiellement le jet de fuite en formant chambre de décompression pour le répartir et le faire s'échapper sur tout le pourtour des brides, pour les cas où l'intervalle séparant les brides a une largeur suffisante, le collier peut en outre comporter une ou deux lèvres de centrage faisant saillie radialement vers l'intérieur formées dans ladite rainure et destinées à s'engager dans ledit intervalle. Ces lèvres de centrage sont situées au milieu de la rainure périphérique précitée. Afin qu'alors elles n'obturent pas les orifices d'injection, il convient qu'elles soient interrompues au droit de chacun de ceux-ci. Avantageusement, les lèvres de centrage sont légèrement déformables pour pouvoir s'adapter aux brides en fléchissant éventuellement lors de la pose du collier et procurer ainsi une jonction parfaite entre collier et brides, sans induire de contraintes dans ces dernières.

Chaque robinet d'injection peut être soit monté à l'extérieur du collier sur un mamelon prolongeant l'orifice d'injection correspondant, soit incorporé à la partie centrale du collier, dont l'épaisseur radiale est augmentée à cet effet. Cette dernière disposition est préférable, car conformément à celle-ci, les robinets ne font pas saillie et sont ainsi protégés. Par contre, en montage extérieur ils sont vulnérables et peuvent être endommagés par exemple au montage ou en cas de coup de bélier sur la canalisation.

La description qui va suivre, en regard des dessins annexés à titre d'exemples non limitatifs, permettra de bien comprendre comment la présente invention peut être mise en pratique.

La Figure 1 représente en coupe longitudinale un collier de cerclage selon l'invention posé sur les brides d'une canalisation.

La Figure 2 représente une coupe suivant la ligne A-A de la figure 1, les robinets étant montrés sur la moitié de gauche en montage extérieur et sur la moitié de droite en montage intégré.

La Figure 3 représente, à échelle agrandie, une coupe suivant la ligne B-B de l'objet de la figure 2, dans une variante de réalisation du collier.

La Figure 4 représente en perspective une partie du collier dans la variante de la figure 3.

La Figure 5 montre, à la manière de la figure 3, une autre variante de réalisation du collier.

La Figure 6 représente, à échelle encore agrandie, une coupe suivant la ligne C-C de l'objet de la figure 2.

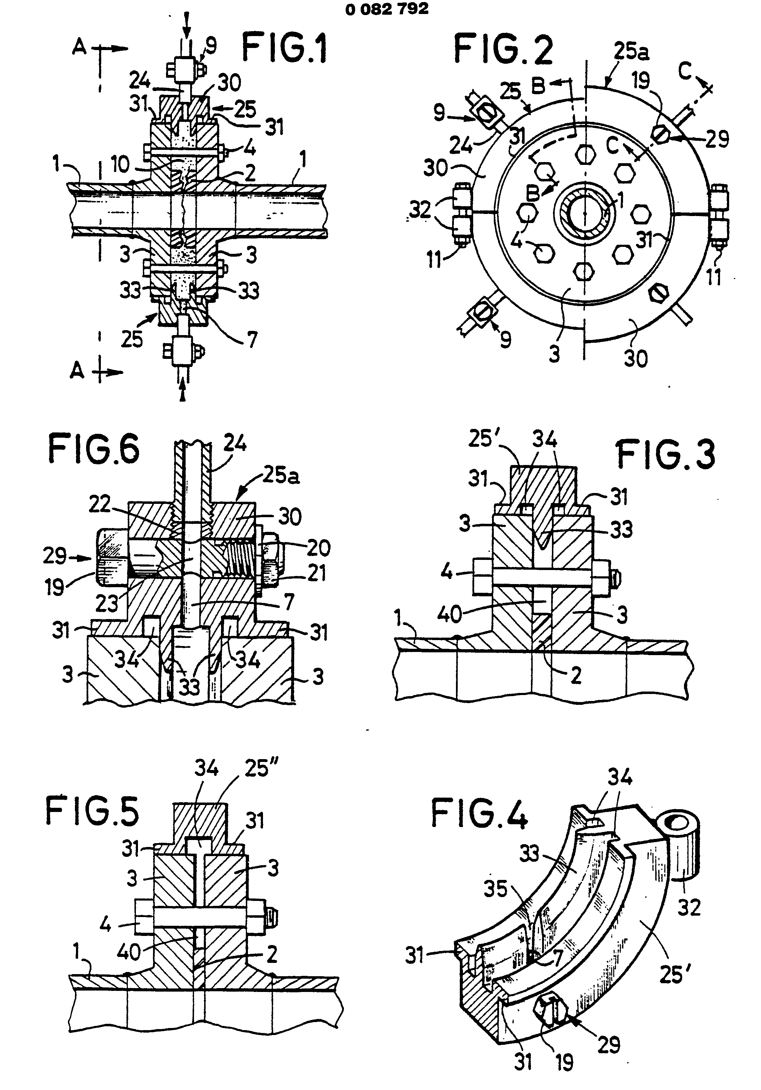

On voit sur la figure 1 une canalisation 1 dont deux tronçons sont reliés par un raccord à brides 3 serrrées par des boulons 4, avec interposition d'un joint d'étanchéité 2. Le dispositif selon l'invention, qui permet d'étancher une fuite apparaissant entre les brides 3, consiste en un collier de cerclage formé de deux demi-bagues 25 qui sont réunies par une paire de boulons 11 engagés dans des fourreaux 32 et fortement serrés. Ces demi-bagues comprennent une partie centrale 30, épaisse et rigide, bordée de deux ailes latérales 31 lisses et relativement minces, qui s'appliquent à plat contre le pourtour des brides 3. En cas de besoin, si un jeu apparaît entre les brides 3 et les ailes latérales 31, celles-ci peuvent être serties sur les brides 3 au moyen d'un outil de sertissage rabattant de proche en proche les ailes 31 contre les brides 3 sur tout le périmètre de celles-ci.

Le collier 25, 25 est percé dans sa partie centrale 30 d'orifices 7 radiaux permettant d'injecter une substance d'obturation 10 entre les brides 3. Chaque orifice d'injection 7 est muni soit d'un robinet 9 monté sur un mamelon 24 prolongeant vers l'extérieur l'orifice 7, soit d'un robinet 29 incorporé au collier 25a, 25a, qui sera décrit plus loin à l'aide de la figure 6. Cette dernière figure montre, comme la figure 1, que le collier comporte sur sa face interne, entre les ailes latérales 31, deux lèvres de centrage 33 parallèles qui s'engagent entre les brides 3. Ces lèvres font saillie sur le fond d'une rainure 34 creusée dans la face interne du collier, qui se décompose de ce fait en deux gorges séparant chacune une aile 31 de la lèvre 33 voisine. Les orifices 7 débouchent entre les lèvres 33.

Lorsque l'intervalle 40 entre les brides 3 est faible. Les demi-bagues du collier prennent la configuration 25' (figure 4) où une unique lèvre de centrage 33 est prévue. Afin que sa présence n'empêche pas l'injection de la substance d'obturation 10, cette lèvre est interrompue par une fente 35 au droit de chaque orifice d'injection 7, comme le montre la figure 4.

Lorsque l'intervalle 40 entre les brides 3 est quasiment nul (figure 5), aucune lèvre de centrage n'est prévue et seule la rainure 34 apparaît entre les ailes 31 en formant une unique gorge, suivant la configuration 25" que montre cette figure.

Dans le cas d'un robinet 29 incorporé au collier (figure 2 moitié de droite et figure 6), la partie centrale 30 des demi-bagues 25a qui le composent offre une épaisseur radiale augmentée et c'est celle-ci qui forme le corps du robinet, lequel est traversé par un boulon 19 percé transversalement d'un trou 23 au droit de l'orifice d'injection versalement d'un trou 23 au droit de l'orifice d'injection 7 et maintenu en place, avec possiblité de rotation, par une rondelle 20 et un écrou 21. Le mamelon 24 est vissé dans la partie centrale 30 en prolongement de l'orifice 7, avec interposition d'une rondelle d'étanchéité 22 en cuivre.

Lorsqu'une fuite se manifeste entre les brides 3 de raccordement d'une canalisation 1 transportant un fluide sous pression, on place autour de ces brides un collier formé de demi-bagues 25, 25' ou 25" suivant le jeu disponible entre les brides. Le jet de fuite se trouve alors canalisé périphériquement par la rainure 34 et s'échappe entre le pourtour des brides et les ailes 31 du collier. Si le collier est mal adapté aux brides, par exemple s'il offre un diamètre un peu supérieur, si les brides présentent un décalage mutuel transversal et/ou angulaire ou si l'état de surface des brides est défectueux, on procède au sertissage des ailes 31 sur les brides au moyen d'un outil vibrant de manière à assurer entre ces éléments un contact métal sur métal parfait en tous points du périmètre du collier. On injecte ensuite la substance d'obturation sous pression par les mamelons 24, en commençant par le plus éloigné de l'endroit de la fuite. Après chaque injection, on ferme le robinet 9 ou 29 correspondant. Lorsque le dernier robinet est fermé, la fuite est colmatée.

**Revendications**

1. Dispositif permettant d'étancher une fuite dans un raccord à brides sur une canalisation, du type comprenant un collier de cerclage formé de deux demi-bagues (25) se plaçant autour des brides (3) comportant au moins une lèvre interne (33) de centrage en contact avec les brides faisant saillie radialement vers l'intérieur et adaptées pour s'engager entre les brides (3) et percé d'au moins un orifice (7) muni d'un robinet (9), par où peut être injectée une substance d'obturation dans l'intervalle séparant les brides, caractérisé par le fait que le collier (25, 25) comporte sur tout son périmètre deux ailes latérales (31) lisses, solidaires d'une partie centrale (30) épaisse et rigide, dudit collier et s'étendant de ladite partie centrale vers l'extérieur en s'appliquant à plat contre le pourtour des brides (3) correspondantes du raccord, chaque aile latérale (31) étant déformable et susceptible d'être sertie sur le pourtour de la bride (3) correspondante au moyen d'un outil de sertissage, et que le collier (25) comporte deux lèvres de centrage déformables (33).

2. Dispositif selon la revendication 1, caractérisé par le fait que le collier (25) comporte sur sa face interne une rainure périphérique (34) formée entre lesdites ailes déformables (31).

3. Dispositif selon la revendication 1, caractérisé par le fait que chaque robinet d'injection (29) est incorporé à la partie centrale (30) du collier, dont l'épaisseur radiale est augmentée à cet effet.

## Claims

1. Apparatus permitting the sealing of leakage in a flange joint on a conduit, of the kind comprising a peripheral collar formed from two half-rings (25) located about the flanges (3) comprising at least one internal centering lip (33) in contact with the flanges and directed radially inwardly to the interior and arranged to lodge between the flanges (3) and interrupted by at least one aperture (7) provided with a valve (9) through which a sealing substance can be injected into the gap separating the flanges, characterised in that the collar (25, 25) comprises about its entire perimeter two smooth lateral wings (31) connected to a thick and rigid central part (30) of the collar and extending from such central part to the exterior and contacting the periphery of the corresponding flanges (3) of the joint, each lateral wing (31) being deformable and mountable on the periphery of the corresponding flange (3) by means of a mounting tool and that the collar (25) comprises two deformable centering lips (33).

2. Apparatus according to claim 1, characterised in that, on its internal face, the collar (25) has a peripheral groove (34) formed between such deformable wings (31).

3. Apparatus according to claim 1, characterised in that each injection valve (29) is incorporated in the central part (30) of the collar, the radial thickness of which is increased for this purpose.

## Patentansprüche

1. Vorrichtung zum Abdichten einer Undichtheit in einer Flanschverbindung an einer Rohrleitung, von der Art mit einem aus zwei um die Flasche (3) angeordneten Halbringen (25) mit mindestens einer inneren Zentrierlippe (33), welche in Berührung mit den radial nach innen vorspringenden und zum Eingriff in die Flansche (3) geeigneten Flanschen stehen und mit mindestens einer mit einem Hahn (9) ausgestatteten Öffnung (7) versehen ist, durch welche eine Verschlußsubstanz in den die Flansche trennenden Abstand eingespritzt werden kann, gebildeten Reifenflansch, dadurch gekennzeichnet, daß der Reifen (25, 25) an seinem gesamten Umfang zwei glatte Seitenflügel (31) aufweist, welche mit einem dicken, starren Mittelteil (30) des Reifens verbunden sind und sich von dem Mittelteil nach außen erstrecken und sich flach an den Umfang der entsprechenden Flansche (3) der Verbindung anlegen, wobei jeder Seitenflügel (31) verformbar ist und mittels eines Bördelgeräts um den Umfang des entsprechenden Flansches (3) gelegt werden kann, und daß der Reifen (25) zwei verformbare Zentrierlippen aufweist.

2. Vorrichtung nach Anspruch 1, dadurch gekennzeichnet, daß der Reifen (25) auf seiner Innenfläche eine zwischen den verformbaren Flügeln (31) ausgebildete Umfangsrille (34) aufweist.

3. Vorrichtung nach Anspruch 1, dadurch gekennzeichnet, daß jeder Einspritzhahn (29) in den Mittelteil (30) des Reifens, dessen radiale Dicke zu diesem Zweck vergrößert ist, eingebaut ist.

0 082 792

FIG.1 FIG.2 FIG.3 FIG.4 FIG.5 FIG.6